## Europäisches Patentamt

## European Patent Office

## Office européen des brevets

(19)

(11) Veröffentlichungsnummer: **0 038 518**
**B1**

(12) **EUROPÄISCHE PATENTSCHRIFT**

(45) Veröffentlichungstag der Patentschrift:
**23.11.83**

(51) Int. Cl.³: **H 04 B 7/26,** H 04 Q 7/00

(21) Anmeldenummer: **81102863.8**

(22) Anmeldetag: **14.04.81**

(54) **Mobiles Funknetz.**

(30) Priorität: **17.04.80 DE 3014859**

(43) Veröffentlichungstag der Anmeldung:
**28.10.81 Patentblatt 81/43**

(45) Bekanntmachung des Hinweises auf die Patenterteilung:
**23.11.83 Patentblatt 83/47**

(84) Benannte Vertragsstaaten:
**AT BE CH FR GB IT LI LU NL SE**

(56) Entgegenhaltungen:
**DE - A - 2 650 823**
**DE - A - 2 659 635**

(73) Patentinhaber: **SIEMENS AKTIENGESELLSCHAFT,**
**Berlin und München Wittelsbacherplatz 2,**
**D-8000 München 2 (DE)**

(72) Erfinder: **Kammerlander, Karl, Wiesenstrasse 10,**
**D-8190 Wolfratshausen (DE)**

## Mobiles Funknetz

Die Erfindung bezieht sich auf ein mobiles Funknetz mit einer anzahl Funkkonzentratoren in gegenseitiger räumlicher Anordnung nach Art eines Zellularsystems mit sich überlappenden Funkbereichen, bei dem jeweils eine fest vorgegebene Anzahl von einander unmittelbar benachbarten Funkbereichen eine Funkbereichsgruppe bilden, in denen sich die insgesamt zur Verfügung stehenden Frequenzkanäle wiederholen, bei dem ferner der Frequenzverteilungsplan für die Funkkonzentratoren so festgelegt ist, dass Gleichkanalstörungen im jeweiligen Funkbereich einschliesslich einer erweiterten Randzone weitgehend ausgeschlossen sind und bei dem wenigstens die Signalisierung in digitaler Form zwischen den ortsfesten Funkkonzentratoren und den beweglichen Teilnehmerstationen über für Duplexbetrieb ausgelegte Organisationskanäle vorgenommen ist und bei dem ferner im Organisationskanal bei jedem Verbindungsaufbau nach einem Verwürfelungsprogramm dem betreffenden Teilnehmer ein Funkkanal zugeteilt wird und in einem Signalisierungsdialog zwischen Teilnehmer und Funkkonzentratoren eine Qualitätsprüfung des betreffenden Kanals auf genügenden Störabstand erfolgt.

Ein mobiles Funknetz dieser Art ist beispielsweise durch die DE-AS Nr. 2659635 bekannt. Jeder Funkkonzentrator verfügt bei diesem bekannten Funknetz über einen zentralen Organisationskanal, in dem die Informationen der verschiedenen Organisationsfunktionen, wie Kennung, Anmeldung, Ummeldung, Anwesenheitsprüfung, Belegung und Ruf zeitgestaffelt übertragen werden.

Ein ähnliches Funknetz ist auch in der Patentanmeldung P Nr. 3009309.5 beschrieben. Dabei ist ein zentraler Organisationskanal vorgesehen, der unter Einsatz einer netzweiten Synchronisation als Mehrfachzugriffkanal gestaltet ist, dessen periodischer Rahmen wenigstens eine der Anzahl der Funkbereiche einer Funkbereichsgruppe entsprechende Zahl aufeinanderfolgende Zeitschlitze aufweist.

Der Erfindung liegt die Aufgabe zugrunde, hinsichtlich der insbesondere bei Kleinzonennetzen auftretenden Störungen eine Verbesserung zu erzielen, die in einem solchen Netz einen weitestgehend störungsfreien Betrieb erlaubt.

Diese Aufgabe wird bei einem Netz der eingangs genannten Art erfindungsgemäss dadurch gelöst, dass bei erfolglosem Ausgang der Versuche zur Ermittlung eines Kanals mit ausreichendem Störabstand eine Laufzeitmessung bei den Teilnehmern vorgenommen wird, um daraus ihren Aufenthaltsbereich festzustellen, und dass bei weiteren erfolglosen Verbindungsversuchen Störvermerke für diejenigen Kanäle, die in der Randzone eines Funkbereichs liegen, in der Datenverarbeitung des Funkkonzentrators eingetragen werden und weitere Zuteilungen so erfolgen, dass Teilnehmern in der Kernzone eines Funkbereiches solche Kanäle der Randzonen zugeteilt werden und denen der Randzonen solche ursprünglich an die Kernzone vergebene Kanäle zugeteilt werden.

Nachstehend wird die Erfindung grundsätzlich erläutert und anschliessend anhand von Figuren ein Beispiel dargestellt.

Erstens werden Kanalzuweisungen grundsätzlich nur nach funktechnischen Kriterien durchgeführt. Dabei wird dem Teilnehmergerät im Organisationskanal bei jedem Verbindungsaufbau von der ortsfesten Seite (Funkkonzentrator [FUKO]) routinemässig ein Funkkanal vorgeschlagen. Im Rahmen dieser Routine schlägt der FUKO im Organisationskanal nach einem Verwürfelungsprogramm fortlaufend in jedem Rufblock einen anderen Sprechkanal vor, der innerhalb des verfügbaren Kanalvolumens um einen ausrenchenden Frequenzabstand variiert. Die bereits belegten Kanäle werden dabei ausgeschlossen.

Auf den dem Teilnehmergerät vorgeschlagenen Kanal wird nun im Signalisierungsdialog zwischen Teilnehmergerät und FUKO die Qualität, d.h. der Störabstand des Kanals, geprüft. Ist die Qualität ausreichend, so wird die Verbindung weiter aufgebaut; ist die Qualität zu niedrig, so wird der Verbindungsaufbau unterbrochen. In diesem Fall schaltet das Teilnehmergerät sofort in den Organisationskanal zurück und erhält dort im nächsten oder einer der nächsten Rufblöcke (je nach Verkehrsaufkommen) einen neuen Kanalvorschlag und führt nun auf diesem wiederum einleitend eine Qualitätsprüfung durch. Führt dabei eine bestimmte, vorzugebende Zahl von Versuchen nicht zum Verbindungsaufbau, so gilt der Teilnehmer als nicht erreichbar.

Durch die Qualitätsprüfung wird erreicht, dass innerhalb des Versorgungsbereiches Störungen — insbesondere Gleichwellenstörungen — erkannt werden, die ihrer Natur nach immer eine standortbedingte Auswirkung haben und ausschliesslich im Bereich relativ niedriger Feldstärken (d.h. in den Randzonen der Funkbereiche) auftreten. Somit kann ein Funksystem durch diese Massnahme ein bestimmtes Mass an Störungsminimierung im eigenen Funkbereich erzielen, weil ein an einer bestimmten Stelle des Funkbereiches gestörter Kanal an vielen anderen Stellen ungestört ist.

Diese Problematik ändert sich aber mit steigender Dichte des Verkehrs in den benachbarten Funkbereichen und bei kleiner werdenden Radien der Funkbereiche (= allgemein grösser werdende Verkehrsdichte, die zu Kleinzonennetzen führt). Nunmehr werden immer grössere Bereiche der Randzonen der Funkbereiche von Gleichwellenstörungen beeinflusst und damit steigt die Zahl der Fehlversuche bei der Kanalzuteilung zwangsläufig an, d.h., es tritt ein Ansteigen der netzweiten Störungen auf. Dies wird verhindert durch eine Unterscheidung zwischen Teilnehmern, die in Randzonen und Kernzonen von Funkbereichen operieren, wobei jeweils die in den Randzonen gestörten Kanäle in den unstörbaren Kernzonen unter gleichzeitiger Reduzierung der Sendeleistung verwendet und die jeweils ungestörten Kanäle in den Randzonen eingesetzt werden.

In vorteilhafter Weiterbildung des Erfindungsgegenstandes ist vorgesehen, dass gleichzeitig mit dem Kanaltausch Randzone-Kernzone eine automatische Reduzierung der Sendeleistungen vorgenommen wird, wenn die Empfangsfeldstärken der ortsfesten und der mobilen Stationen einen vorzubestimmenden oder einen den ungestörten Betrieb gewährleistenden gegenseitigen Feldstärkewert überschreiten, wodurch die Störeinwirkungen auf andere, entferntere Funkbereiche, welche die gleichen Kanäle benutzen, entsprechend vermindert werden.

Durch die erfindungsgemässen Massnahmen und die gleichzeitige Speicherung und Verarbeitung der kanalspezifischen Daten bei der Kanalzuteilung wird eine automatische, adaptive, netzweite Verbesserung der Frequenzökonomie durch Minimierung von gleichwellenstörungen und die Berücksichtigung lokaler Störungen erzielt.

Nachstehend wird ein Ausführungsbeispiel der Erfindung anhand von Figuren näher erläutert.

Fig. 1 und 2 dienen dabei der Erläuterung eines Funknetzes nach Art eines Zellularnetzes,

Fig. 3 zeigt eine räumliche Zuordnung von Funkbereichen der gleichen Ordnungszahl, und

Fig. 4 zeigt den gegenseitigen Feldstärkeverlauf zweier Funkstationen.

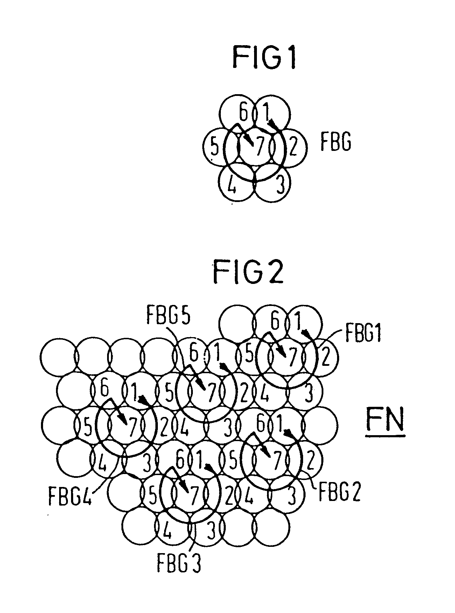

Die in Fig. 1 dargestellte Funkbereichsgruppe FBG besteht aus sieben Funkbereichen 1, 2, ... 7, die sich in den Randzonen geringfügig überlappen und in deren Zentrum jeweils ein Funkkonzentrator angeordnet ist, der die räumliche Lage des betreffenden Funkbereichs bestimmt. Die Funkbereichsgruppe FBG stellt eine Organisationseinheit innerhalb des in Fig. 2 dargestellten Funknetzes FN dar. Dieses Funknetz FN umfasst hierbei fünf solcher Funkbereichsgruppen FBG1 ... FBG5. Innerhalb einer solchen Funkbereichsgruppe FBG können sämtliche innerhalb des Netzes verfügbaren Frequenzkanäle maximal einmal zugeteilt werden. Das Funknetz FN arbeitet mit einer netzweiten Synchronisation. Die Sprechkanäle und der wenigstens eine Organisationskanal sind für Duplexbetrieb ausgelegt, d.h., dass jedem Kanal ein Frequenzkanalpaar zugeordnet ist. Hierbei ist der gegenseitige Frequenzabstand zwischen den beiden Frequenzen eines Frequenzkanalpaares für alle Kanäle konstant. Dies wird dadurch erreicht, dass von dem zur Verfügung stehenden Frequenzvorrat, beispielsweise in einem Oberband von 461,3 bis 465,74 MHz und einem dem Oberband zugeordneten Unterband im Bereich von 451,3 bis 455,74 MHz jeweils eine Frequenz gemeinsam ein Frequenzkanalpaar mit einem gegenseitigen Frequenzabstand von 10 MHz bilden. Das Frequenzraster im Ober- wie im Unterband weist dabei beispielsweise einen Rasterabstand von 20 kHz auf.

Wie Fig. 2 zeigt, sind die Funkbereichsgruppen FBG1 ... FBG5 innerhalb des Funknetzes FN so angeordnet, dass die die gleiche Kennzahl aufweisenden Funkbereiche räumlich voneinander einen grösstmöglichen und konstanten Abstand haben. Der Frequenzverteilplan in einem solchen Funknetz entspricht dabei der Bezifferung der Funkbereiche, d.h., dass Funkbereichen mit der gleichen Kennzahl gleiche Frequenzkanäle zugeordnet sein können. Durch die räumliche Trennung dieser Funkbereiche mit gleicher Kennzahl (Ordnungszahl der Kanäle) werden Gleichkanalstörungen bereits planungsgemäss reduziert, können aber durch geographische Unregelmässigkeiten und insbesondere bei Kleinzonennetzen nicht vermieden werden.

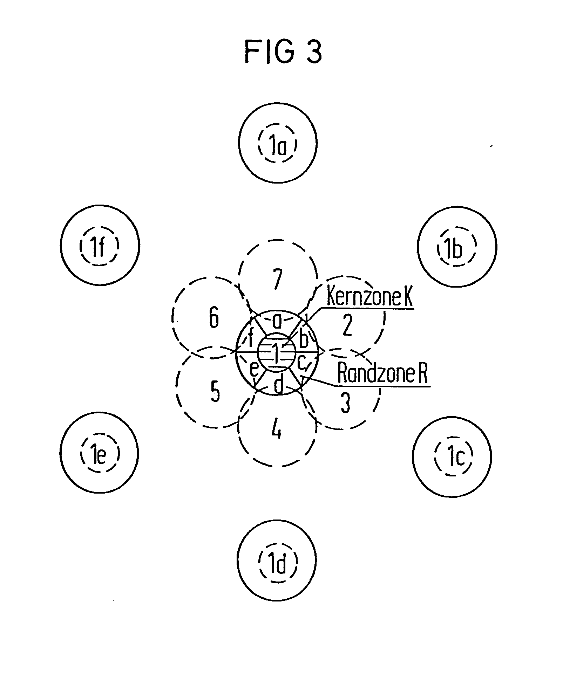

Erfindungsgemäss wird nun durch die beiden sich ergänzenden Massnahmen eine netzweite Minimierung der Störungen erreicht. Die in einem Funkbereich auftretenden Gleichwellenstöreinflüsse werden durch die im Frequenzwiederbenutzungsabstand befindlichen Funkbereiche gleicher Kennzahl, die auch die gleichen Frequenzkanäle benutzen, verursacht. In Fig. 3 wird der Gleichwellenstöreinfluss im zentralen Funkbereich 1 (der bei beliebig grossen Funkversorgungsgebiet für alle Funkbereiche gleich ist) durch die umliegenden Funkbereiche 1a bis 1f erzeugt. Der Störeinfluss entsteht infolge geographischer Unregelmässigkeiten, die zu Überreichweiten führen und insbesondere durch die Bildung von Funkbereichen mit kleinen Radien (Kleinzonennetzen) in Ballungsgebieten. Dabei tritt im Segment a der Randzone R des Funkbereiches 1 hauptsächlich eine Störung durch den Funkbereich 1a auf usw.

Berücksichtigt man nun, dass bestimmte Radiokanäle in den einzelnen Funkbereichen im Durchschnitt nur sporadisch mit einer bestimmten Wahrscheinlichkeit benutzt werden, so ergibt sich in den Randzonensegmenten ein entsprechender, sporadischer Störeinfluss. Dieser Störeinfluss kann nun durch die Kanalzuteilung nach Funkkriterien bzw. durch die erste erfindungsgemässe Massnahme der Prüfung der Verbindungsqualität beim Verbindungsaufbau minimiert werden: Durch die Erkennung einer Störung kann auf einen anderen Kanal ausgewichen werden, der gegenwärtig störungsfrei ist. Da sich die Situation der Störung fortlaufend verändert, wird ein als gestört gefundener Kanal grundsätzlich nur für eine bestimmte Verbindung nicht benutzt, für andere Verbindungen, die einer vollkommen anderen Störsituation unterliegen, aber sofort wieder freigegeben.

Ein Grenzfall ist dann erreicht, wenn zu Zeiten maximaler Verkehrsauslastung — insbesondere in Kleinzonennetzen — sämtliche Funkkanäle gleichzeitig und ohne Unterbrechung (z.B. Warteschlangenbetrieb) in Betrieb sind. In diesem Fall tritt mit hoher Wahrscheinlichkeit Dauerstörung in den gesamten Randzonen aller Funkbereiche auf. Das heisst, dass solche Funkkanäle, die in anderen Bereichen gleicher Ordnungszahl mit maximaler Leistung betrieben werden müssen, unter Umständen in der gesamten Randzone eines Bereiches nicht mehr zugeteilt werden können.

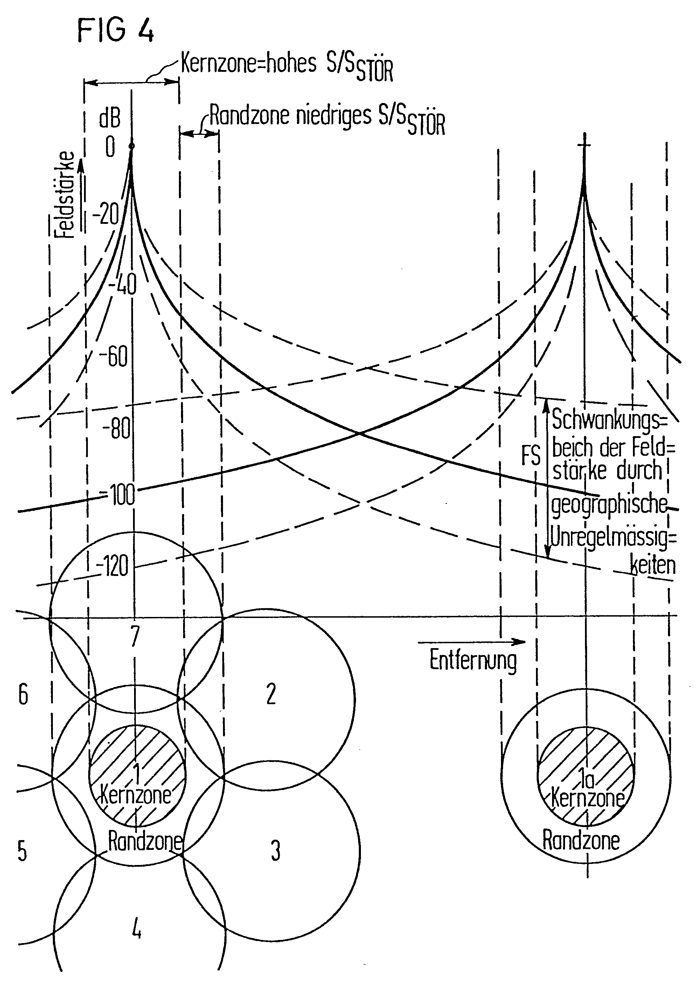

Durch die erfindungsgemässe Massnahme, der Zuordnung von Funkteilnehmern zu Kernzonen K und Randzonen R der Funkbereiche, die durch eine Laufzeitmessung geschieht, können nun die in den Randzonen gestörten Kanäle an Funkteilnehmer in den störungsfreien Kernzonen vergeben werden. Die Störungsfreiheit in der Kernzone hat seine Ursache im hyperbolischen Anstieg der Feldstärke in Sendernähe (s. Fig. 4), die zu einem umgekehrtentfernungsabhängigen Störabstand führt.

In Fig. 4 sind zur Verdeutlichung die Kernzone K mit einem hohen Signal zu Störverhältnis S/Stör und die Randzone R mit niedrigem S/Stör unterhalb der Abszisse des Felstärkebildes schematisch angedeutet. Der Schwankungsbereich FS der Feldstärke durch geographische Unregelmässigkeiten ist rechts durch die gestrichelten Linien des Feldstärkeverlaufes angedeutet.

Da der Störabstand weit über das erforderliche Mass ansteigen kann, wird die Sendeleistung ab Erreichen eines bestimmten Grenzwertes oder eines bestimmten Störabstandes zurückgeregelt, so dass nunmehr die Störauswirkung dieses Kanals in den Randzonen anderer Funkbereiche verringert wird und damit in diesen Randzonen eine niedrigere Gleichwellenstörung herrscht. Kanäle, die in einem Funkbereich aber aufgrund der Verbindungssituation mit maximaler Leistung betrieben werden müssen, führen zwangsläufig zu erhöhter Gleichwellenstörung in den Randzonen benachbarter Funkbereiche; diese Kanäle werden dort aber als gestört erkannt und ebenfalls aufgrund der zweiten erfindungsgemässen Massnahme in die Kernzone unter möglicher, gleichzeitiger Reduzierung der Sendeleistung vergeben.

Aufgrund dieser durch die Erfindung erreichten, automatischen netzweiten Adaptation lässt sich die Gleichwellenstörung, die insbesondere in Kleinzonennetzen die Frequenzökonomie merklich reduziert, netzweit entsprechend der jeweiligen Verteilungssituation und Dichte gesprächsführender Teilnehmer automatisch minimieren.

Die oben geschilderten Massnahmen können bevorzugt angewendet werden bei einer Systemorganisation, wie sie in der Anmeldung P Nr. 3009309.5 beschrieben ist.

Die Speicherung der Messwerte und Auswertung übernimmt dabei zweckmässig eine Datenverarbeitung zur Kanalverwaltung im Funkkonzentrator eines solchen Systems.

## Patentansprüche

1. Mobiles Funknetz mit einer Anzahl Funkkonzentratoren (FUKOs) in gegenseitiger räumlicher Anordnung nach Art eines Zellularsystems mit sich überlappenden Funkbereichen (1, 2 ... 7), bei dem jeweils eine fest vorgegebene Anzahl von einander unmittelbar benachbarten Funkbereichen eine Funkbereichsgruppe (FBG) bilden, in denen sich die insgesamt zur Verfügung stehenden Frequenzkanäle wiederholen, bei dem ferner der Frequenzverteilungsplan für die Funkkonzentratoren (FUKOs) so festgelegt ist, dass Gleichkanalstörungen im jeweiligen Funkbereich einschliesslich einer erweiterten Randzone weitgehend ausgeschlossen sind und bei dem wenigstens die Signalisierung in digitaler Form zwischen den ortsfesten Funkkonzentratoren (FUKOs) und den beweglichen Teilnehmerstationen über für Duplexbetrieb ausgelegte Organisationskanäle vorgenommen ist und bei dem ferner im Organisationskanal bei jedem Verbindungsaufbau nach einem Verwürfelungsprogramm dem betreffenden Teilnehmer ein Funkkanal zugeteilt wird und in einem Signalisierungsdialog zwischen Teilnehmer und Funkkonzentrator (FUKO) eine Qualitätsprüfung des betreffenden Kanals auf genügenden Störabstand erfolgt, dadurch gekennzeichnet, dass bei erfolglosem Ausgang der Versuche zur Ermittlung eines Kanals mit ausreichendem Störabstand eine Laufzeitmessung bei den Teilnehmern vorgenommen wird, um daraus ihren Aufenthaltsbereich festzustellen, und dass bei weiteren erfolglosen Verbindungsversuchen Störvermerke für diejenigen Kanäle, die in der Randzone (R) eines Funkbereiches (1, 2 ... 7) liegen, in der Datenverarbeitung des Funkkonzentrators (FUKO) eingetragen werden und weitere Zuteilungen so erfolgen, dass Teilnehmern in der Kernzone (K) eines Funkbereiches (1, 2 ... 7) solche Kanäle der Randzonen (R) zugeteilt werden und denen der Randzonen (R) solche ursprünglich an die Kernzone (K) vergebene Kanäle zugeteilt werden.

2. Mobiles Funknetz nach Anspruch 1, dadurch gekennzeichnet, dass gleichzeitig mit dem Kanaltausch Randzone-Kernzone (R-K) eine automatische Reduzierung der Sendeleistungen vorgenommen wird, wenn die Empfangsfeildstärken der ortsfesten und der mobilen Stationen einen vorzubestimmenden oder einen den ungestörten Betrieb gewährleistenden gegenseitigen Feldstärkewert überschreiten.

## Claims

1. A mobile radio network having a number of radio concentrators (FUKOs) which are arranged side by side in the manner of a cellular system with overlapping radio ranges (1, 2 ... 7), wherein a firmly predetermined number of directly adjacent radio ranges forms a radio range group (FBG), all the frequency channels available being repeated in each group, and wherein furthermore the frequency distribution plan for the radio concentrators (FUKOs) is so determined that common channel interference in the respective radio range including an extended edge zone are largely eliminated, and wherein at least the signalling is carried out in digital form between the stationary radio concentrators (FUKOs) and the moving subscriber stations by means of organization channels designed for duplex operation, and wherein furthermore in the organization channel, in each connection establishment, the respective subscriber is assigned a radio channel in accordance with a scrambling programme and a quality check of the respective channel, in respect of sufficient signal-to-noise ratio, is effected in a signalling dialogue between subscriber and radio concentrator (FUKO), characterized in that, in the event of an unsuccessful result of the attempts to detect a channel having an adequate signal-to-noise ratio, a transit time measurement is carried out with the subscribers in order to locate their region of sojourn therefrom, and that, in the event of further unsuccessful connection attempts, interference entries for those channels which lie in the edge zone (R) of a radio range (1, 2 ... 7) are entered into the data processing unit of the radio concentrator (FUKO) and further allocations are so effected that subscribers in the core zone (K) of a radio range (1, 2 ... 7) are assigned such channels of the edge zones (R), and those of the edge zones (R) are assigned such channels which have originally been allocated to the core zone (K).

2. A mobile radio network as claimed in claim 1, characterized in that an automatic reduction of the transmitting capacities is effected simultaneously with the channel exchange edge zone-core zone (R-K) if the receiving field strengths of the stationary and of the mobile stations exceed a mutual field strength value which is to be predetermined or which ensures undisturbed operation.

**Revendications**

1. Réseau de stations de radio mobiles comportant un certain nombre de concentrateurs hertziens (FUKO) situés dans une disposition spatiale réciproque à la manière d'un système cellulaire comportant des régions de radiocommunications (1, 2 ... 7) à chevauchement, et dans lequel un nombre prédéterminé de façon fixe de régions de radiocommunications directement voisines les unes des autres, dans lesquelles les canaux de fréquence globalement disponibles se répètent, forment un groupe (FBG) de régions de radiocommunications, et dans lequel, en outre, le plan de répartition des fréquences pour les concentrateurs hertziens (FUKO) est déterminé de telle manière que les interférences par canal commun sont dans une large mesure éliminées dans la région respective de radiocommunications ainsi que dans une zone marginale étendue, et dans lequel au moins la signalisation numérique entre les concentrateurs hertziens fixes (FUKO) et les stations d'abonnés mobiles est réalisée par l'intermédiaire de canaux d'organisation conçus pour le fonctionnement en duplex, et dans lequel, en outre, dans le canal d'organisation, lors de chaque établissement d'une liaison, un canal de radiocommunications est affecté selon un programme de codage à l'abonné considéré et, dans un dialogue de signalisation entre l'abonné et le concentrateur hertzien (FUKO), un contrôle de qualité du canal considéré est effectué pour savoir s'il présente un rapport signal/bruit suffisant, caractérisé par le fait que, dans le cas d'un résultat positif des tentatives visant à déterminer un canal possédant un rapport signal/bruit suffisant, une mesure du temps de transit est effectuée auprès des abonnés afin de déterminer, à partir de là, leur zone de séjour et que, lors de tentatives supplémentaires d'établissement de liaison, des indications de perturbations, pour les canaux qui sont situés dans la zone marginale (R) d'une région de radiocommunications (1, 2 ... 7), sont introduites dans le traitement des données du concentrateur hertzien (FUKO), et d'autres affectations sont réalisées de telle manière que de tels canaux des zones marginales (R) soient affectés à des abonnés situés dans la zone centrale (K) d'une région de radiocommunications (1, 2 ... 7), et que de tels canaux attribués à l'origine à la zone centrale (K) soient affectés aux abonnés des zones marginales (R).

2. Réseau de stations de radio mobiles selon la revendication 1, caractérisé par le fait qu'une réduction automatique des puissances d'émission est réalisée, en même temps que la permutation des canaux zone marginale-zone centrale (R-K), lorsque les intensités de champ de réception des stations fixes et des stations mobiles dépassent une valeur devant être prédéterminée ou une valeur réciproque garantissant le fonctionnement non perturbé.

# FIG 1

FBG

# FIG 2

FBG5

FBG1

FN

FBG4

FBG2

FBG 3

# FIG 3

## FIG 4

Kernzone=hohes S/S_STÖR

Randzone niedriges S/S_STÖR

dB

Feldstärke

0

−20

−40

−60

−80

−100

−120

Schwankungs= bereich der Feld= stärke durch geographische Unregelmässig= keiten

FS

Entfernung

7

6

2

5

3

4

1 Kernzone

Randzone

1a Kernzone

Randzone